# FASCICULE DE BREVET EUROPEEN

(11) **EP 2 514 305 B1**
(45) Date de publication et mention de la délivrance du brevet: **22.07.2015**
(21) Numéro de dépôt: 12164606.1
(22) Date de dépôt: 18.04.2012
(51) Int. Cl.: A01J 25/11, B65D 81/26

(54) **Dispositif d'égouttage pour préparation de type yaourt ou fromage blanc**
Abtropfvorrichtung für Zubereitung vom Typ Joghurt oder Frischkäse
Dewatering device for a preparation such as yoghurt or fromage frais

(30) Priorité: 22.04.2011 FR 1153528
(43) Date de publication de la demande: 24.10.2012
(73) Titulaire: SEB S.A., 69130 Ecully (FR)
(72) Inventeur: Charles, Patrick, 65290 Louey (FR); Astegno, Jean-Paul, 64420 Espoey (FR); Lacourpaille, Gérard, 65380 Ossun (FR)
(74) Mandataire: Cémeli, Eric Philippe Laurent

(56) Documents cités:
- EP-A1- 0 364 049
- EP-A1- 0 823 991
- DE-A1- 2 929 641
- DE-U- 1 893 484
- US-A- 1 418 242
- US-A- 5 373 779

## Description

La présente invention concerne le domaine technique des dispositifs d'égouttage pour préparations alimentaires partiellement coagulées, ainsi que les appareils domestiques de type yaourtière.

La présente invention concerne notamment les dispositifs d'égouttage pour les préparations alimentaires fermentées à base de lait, telles que le yaourt ou le fromage blanc. Après chauffage du lait et des ferments, la matière coagulée est imprégnée d'un liquide appelé petit lait ou sérum. La consommation de ce liquide n'est pas toujours souhaitée, ce qui conduit à égoutter les préparations ainsi obtenues avant leur consommation.

Dans la méthode traditionnelle de réalisation du yaourt turc, un linge est utilisé pour séparer le petit lait de la matière coagulée. La finesse du maillage permet de retenir de manière satisfaisante la matière coagulée. Cette méthode demande cependant une certaine dextérité.

Le document US 5 373 779 divulgue un dispositif d'égouttage pour séparer le petit lait du yaourt, qui présente une structure rigide. Une telle structure rigide facilite la manipulation du dispositif d'égouttage. La partie filtrante est montée dans un cadre présentant deux parois latérales pleines. La partie filtrante présente une géométrie en W s'étendant sur deux parois latérales et un fond en V inversé. Cette disposition permet de rigidifier la partie filtrante, en réduisant la taille des parties planes de la partie filtrante. Un inconvénient de la réalisation précitée réside dans la diminution du volume utile du dispositif d'égouttage.

Les documents US1418242 et EP0823991 A1 divulguent des moules a fromage avec des parois filtrantes.

Un objet de la présente invention est de proposer un dispositif d'égouttage du type précité, qui présente une meilleure compacité.

Cet objet est atteint avec un dispositif d'égouttage pour préparations alimentaires partiellement coagulées, comportant un réceptacle filtrant présentant au moins une fenêtre d'égouttage, le réceptacle filtrant présentant un fond perméable comportant au moins l'une des fenêtres d'égouttage, le réceptacle filtrant comprenant un corps principal délimitant la ou les fenêtres d'égouttage, le corps principal portant au moins une paroi filtrante s'étendant au travers de la ou de l'une au moins des fenêtres d'égouttage, le corps principal et la ou les parois filtrantes étant assemblés par surmoulage ou par collage, du fait que que le réceptacle filtrant présente au moins deux fenêtres d'égouttage de sorte qu'au moins une partie du corps principal s'étend entre lesdites deux fenêtres d'égouttage, et que le fond perméable comporte au moins deux fenêtres d'égouttage séparées par une traverse issue du corps principal, la largeur de la ou de chacune des traverses étant inférieure à la largeur de chacune des fenêtres d'égouttage. Le corps principal forme ainsi une armature entre deux fenêtres d'égouttage. Cette disposition permet de réaliser un réceptacle filtrant présentant des surfaces filtrantes de dimension importante, tout en étant suffisamment rigide. Il n'est plus nécessaire d'incurver la ou les parois filtrantes selon plusieurs directions pour renforcer la rigidité. Le réceptacle filtrant peut être dimensionné pour contenir l'équivalent de plusieurs portions individuelles. Le fond du réceptacle filtrant peut être plan tout en présentant une ou plusieurs surfaces filtrantes, ce qui permet d'obtenir un réceptacle filtrant s'inscrivant plus facilement dans un volume simple tel qu'un parallélépipède. La compactité du réceptacle filtrant peut ainsi être plus facilement optimisée. Cette disposition permet d'améliorer l'égouttage de la partie centrale de la préparation. Cette disposition permet aussi de favoriser les échanges thermiques lors de la coagulation de la préparation dans le réceptacle filtrant disposé dans un récipient extérieur placé dans une enceinte chauffée, telle que par exemple une yaourtière électrique. Cette disposition permet de faciliter la réalisation de dispositifs d'égouttage présentant une capacité supérieure à la capacité usuelle d'un contenant individuel, c'est-à-dire plus de 250 ml.

Selon un mode de réalisation, le réceptacle filtrant comporte plusieurs faces et les fenêtres d'égouttage appartiennent chacune à l'une des faces du réceptacle filtrant. Ainsi chaque fenêtre d'égouttage s'étend sur une face seulement du réceptacle filtrant. De préférence, les faces du réceptacle filtrant sont planes ou incurvées selon une seule direction. Les fenêtres d'égouttage peuvent ainsi comporter des parois filtrantes planes ou incurvées selon une seule direction. La réalisation du réceptacle filtrant est facilitée.

Avantageusement alors, le fond perméable comporte au moins quatre fenêtres d'égouttage et quatre traverses issues du corps principalséparent lesdites fenêtres d'égouttage. De ce fait, les fenêtres d'égouttage ne sont pas alignées mais peuvent être réparties selon deux directions, par exemple sur au moins deux rangées et deux colonnes. Cette disposition permet de faciliter la réalisation de dispositifs d'égouttage présentant une capacité supérieure ou égale à 400 ml.

Avantageusement, le réceptacle filtrant présente au moins une paroi latérale perméable comportant au moins l'une des fenêtres d'égouttage. Cette disposition permet d'améliorer l'égouttage de la préparation, notamment en début d'opération.

Avantageusement alors, la ou au moins l'une des parois latérales perméables comporte au moins deux fenêtres d'égouttage séparées par un montant latéral issu du corps principal. Cette disposition permet de faciliter la réalisation de dispositifs d'égouttage présentant une capacité supérieure ou égale à 400 ml.

Avantageusement alors, le réceptacle filtrant présente deux parois latérales perméables agencées de manière opposée. Cette disposition permet d'améliorer l'égouttage de la préparation, notamment en début d'opération. Cette disposition contribue également à améliorer l'homogénéité de la préparation.

Avantageusement alors, chacune des parois latérales perméables comporte au moins deux fenêtres d'égouttage séparées par un montant latéral issu du corps principal, la largeur du montant latéral étant inférieure à la largeur des fenêtres d'égouttage des parois latérales perméables. Cette disposition facilite la réalisation d'un réceptacle filtrant de grande capacité. Cette disposition permet notamment d'obtenir un réceptacle filtrant allongé présentant une capacité importante ainsi que de bonnes performances de filtration.

Avantageusement alors, le montant latéral forme un élément de rigidification s'élevant sur toute la hauteur de la paroi latérale perméable.

Avantageusement, le réceptacle filtrant présente deux parois latérales pleines agencées de manière opposée. Cette disposition permet d'améliorer la rigidité du réceptacle filtrant et de faciliter sa manipulation en évitant un contact avec les fenêtres d'égouttage. Cette disposition facilite aussi la réalisation d'un dispositif d'égouttage comportant des protubérances latérales externes susceptibles d'être supportées par des organes de support d'un récipient extérieur recevant le petit lait, pour permettre un égouttage en position haute.

Avantageusement alors, les deux parois latérales pleines sont intercalées entre les deux parois latérales perméables. Cette disposition permet d'obtenir un réceptacle filtrant facile à enlever d'un récipient extérieur recueillant le petit lait, et qui permet un rangement compact.

Avantageusement, une même paroi filtrante s'étend au travers d'au moins deux fenêtres d'égouttage. Cette disposition permet de simplifier la réalisation du réceptacle filtrant.

Selon un mode de réalisation avantageux, le corps principal est surmoulé sur la ou les parois filtrantes autour de la ou des fenêtres d'égouttage. Le corps principal est alors avantageusement réalisé en matière plastique. En alternative, les parois filtrantes pourraient par exemple être collées sur le corps principal, de préférence du côté intérieur du réceptacle filtrant.

Avantageusement alors, pour faciliter le nettoyage du réceptacle filtrant contenant la préparation, la ou les fenêtres d'égouttage sont affleurantes du côté intérieur du réceptacle filtrant.

Avantageusement, la ou les parois filtrantes ménagent des passages inférieurs à 500 µm, et de préférence compris entre 50 µm et 200 µm. Cette disposition permet de retenir de manière satisfaisante les préparations coagulées de type yaourt dans le réceptacle filtrant, tout en assurant l'égouttage du petit lait. Pour la réalisation de fromage blanc, un maillage plus large peut être envisagé, par exemple jusqu'à 2 mm.

Selon un mode de réalisation avantageux, la ou les parois filtrantes sont réalisées en matériau tissé. En alternative, les parois filtrantes pourraient par exemple être réalisées en matériau non tissé, ou encore en métal perforé obtenu par exemple par électroérosion.

Avantageusement encore, la ou chaque paroi filtrante couvre la ou au moins l'une des fenêtre(s) d'égouttage.

Avantageusement encore, la (les) paroi(s) filtrante(s) s'étendent au-delà des bords latéraux des fenêtres d'égouttage pour assurer une bonne liaison avec le corps principal.

Ces objets sont atteints également avec une yaourtière électrique domestique, comportant une enceinte logeant un récipient extérieur prévu pour contenir un réceptacle filtrant et une préparation à base de lait et de ferments, l'enceinte étant associée à des moyens de chauffe, le récipient extérieur et le réceptacle filtrant formant un dispositif d'égouttage, du fait que le dispositif d'égouttage comportant le réceptacle filtrant est conforme à l'une au moins des caractéristiques précitées.

L'invention sera mieux comprise à l'étude d'un exemple de réalisation, pris à titre nullement limitatif, illustré dans les figures annexées, dans lesquelles :
- la figure 1 est une vue en perspective d'un exemple de réalisation d'un réceptacle filtrant d'un dispositif d'égouttage selon l'invention,
- la figure 2 est une vue en perspective de dessous du réceptacle filtrant illustré sur la figure 1,
- la figure 3 est une vue partielle en coupe du réceptacle filtrant illustré sur les figures 1 et 2, montrant une paroi filtrante s'étendant au travers d'une fenêtre d'égouttage,
- la figure 4 est une vue en perspective d'un récipient extérieur du dispositif d'égouttage, prévu pour recevoir le réceptacle filtrant illustré sur les figures 1 et 2,
- la figure 5 est une vue en perspective et en coupe d'une yaourtière électrique domestique contenant le dispositif d'égouttage illustré sur les figures 1 à 4.

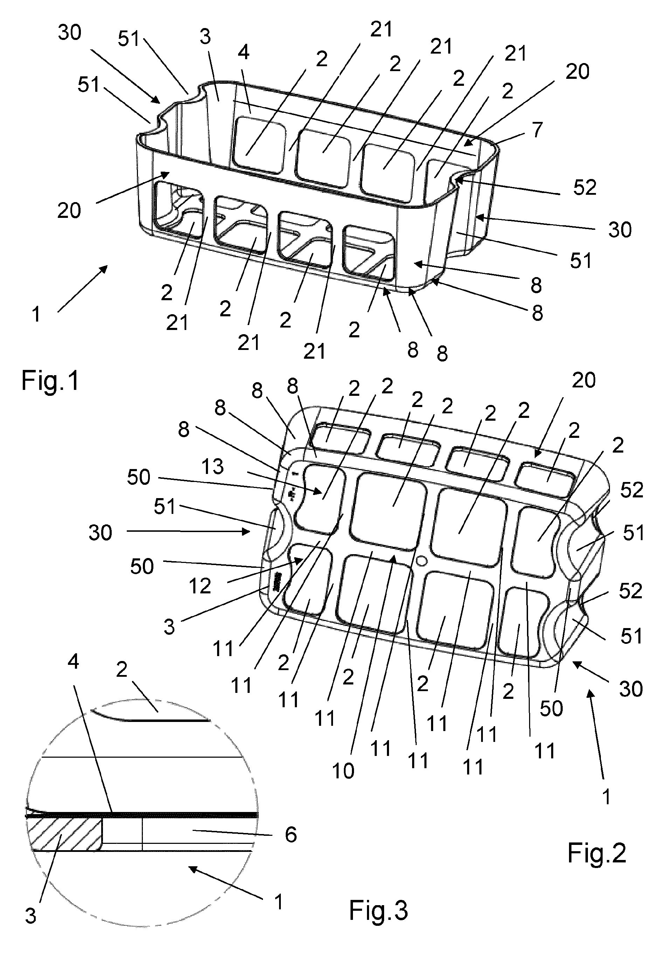

Le dispositif d'égouttage pour préparations alimentaires partiellement coagulées illustré sur les figures 1 à 5 comporte un réceptacle filtrant 1 prévu pour séparer le petit lait de la partie coagulée de la préparation, par exemple du yaourt ou du fromage blanc. A cet effet le réceptacle filtrant 1 présente au moins une fenêtre d'égouttage 2. Le réceptacle filtrant 1 comprend un corps principal 3 portant au moins une paroi filtrante 4 s'étendant au travers de la ou de l'une au moins des fenêtres d'égouttage 2. Le dispositif d'égouttage comporte aussi un récipient extérieur 5 prévu pour recevoir le réceptacle filtrant 1.

Selon une caractéristique de l'invention, le réceptacle filtrant 1 présente au moins deux fenêtres d'égouttage 2, de sorte qu'au moins une partie du corps principal 3 s'étend entre lesdites deux fenêtres d'égouttage 2. Le corps principal 3 délimite ainsi les fenêtres d'égouttage 2.

Selon une autre caractéristique de l'invention, le réceptacle filtrant 1 comporte plusieurs faces, et les fenêtres d'égouttage 2 appartiennent chacune à l'une des faces du réceptacle filtrant 1. Les faces du réceptacle filtrant 1 peuvent être raccordées entre elles par des arrondis 8.

Tel que visible sur les figures 1 et 2, le réceptacle filtrant 1 présente un fond perméable 10 comportant des fenêtres d'égouttage 2. Le réceptacle filtrant 1 présente deux parois latérales perméables 20 comportant des fenêtres d'égouttage 2. Les parois latérales perméables 20 s'élèvent à partir du fond perméable 10. Le réceptacle filtrant 1 présente deux parois latérales perméables 20 agencées de manière opposée ainsi que deux parois latérales pleines 30 agencées de manière opposée. Les deux parois latérales pleines 30 sont intercalées entre les deux parois latérales perméables 20. Pour améliorer les performances d'égouttage, la longueur des parois latérales perméables 20 est avantageusement supérieure à la longueur des parois latérales pleines 30.

Plus particulièrement, le fond perméable 10 comporte deux rangées 12, 13 alignées de quatre fenêtres d'égouttage 2. Ainsi deux fenêtres d'égouttage 2 adjacentes sont séparées par une traverse 11 issue du corps principal 3, et quatre traverses 11 séparent quatre fenêtres d'égouttage 2 adjacentes. Les fenêtres d'égouttage 2 du fond perméable 10 s'étendent à distance des parois latérales perméables 20 et des parois latérales pleines 30. Les traverses 11 de chacune des rangées 12, 13 sont alignées. Les traverses 11 forment ainsi des éléments de rigidification traversant le fond perméable 10 selon deux directions.

Plus particulièrement, chacune des parois latérales perméables 20 comporte quatre fenêtres d'égouttage 2 alignées, deux fenêtres d'égouttage 2 adjacentes sont séparées par un montant latéral 21 issu du corps principal 3. Les fenêtres d'égouttage 2 des parois latérales perméables 20 s'étendent à distance du fond perméable 10. Les montants latéraux 21 forment ainsi des éléments de rigidification s'élevant sur toute la hauteur des parois latérales perméables 20, les fenêtres d'égouttage 2 n'occupant qu'une partie de la hauteur des parois latérales perméables 20. Les fenêtres d'égouttage 2 des parois latérales perméables 20 s'étendent aussi à distance des parois latérales pleines 30.

Les traverses 11 et les montants latéraux 21 permettent d'obtenir une proportion élevée de surfaces d'égouttage par rapport à la surface totale de la face interne du réceptacle filtrant 1. Tel que bien visible sur les figures 1 et 2, la largeur de chacun des montants latéraux 21 est inférieure à la largeur de chacune des fenêtres d'égouttage 2 des parois latérales perméables 20. Tel que bien visible sur les figures 1 et 2, la largeur de chacune des traverses 11 est inférieure à la largeur de chacune des fenêtres d'égouttage 2, pour les traverses 11 agencées dans la direction longitudinale du réceptacle filtrant 1 définie par sa plus grande longueur, comme pour les traverses 11 agencées dans la direction transversale du réceptacle filtrant 1 définie par sa largeur plus faible que sa longueur. Le réceptacle filtrant 1 présente une capacité de 1 litre. Le nombre de traverses 11 et/ou de montants latéraux 21 peut être ajusté en fonction de la capacité souhaitée pour le réceptacle filtrant 1.

Dans l'exemple de réalisation illustré sur les figures, le corps principal 3 est surmoulé sur la paroi filtrante 4 autour des fenêtres d'égouttage 2. Le corps principal 3 est réalisé en matière plastique, par exemple en polypropylène.

Tel que visible sur la figure 3, les fenêtres d'égouttage 2 sont affleurantes du côté intérieur du réceptacle filtrant 1 et ménagent un renfoncement 6 par rapport à la face extérieure du réceptacle filtrant 1 formée par le corps principal 3 .

Tel que visible sur la figure 1, la paroi filtrante 4 s'étend au dessus des fenêtres d'égouttage 2 des parois latérales perméables 20 à distance d'un bord supérieur 7 du réceptacle filtrant 1. La paroi filtrante 4 s'étend au-delà des bords latéraux des fenêtres d'égouttage 2 pour assurer une bonne liaison avec le corps principal 3. La paroi filtrante 4 couvre les fenêtres d'égouttage 2 de l'une des parois latérales perméables 20, les fenêtres d'égouttage 2 du fond perméable 10 et les fenêtres d'égouttage 2 de l'autre paroi latérale perméable 20. La même paroi filtrante 4 s'étend ainsi au travers d'au moins deux fenêtres d'égouttage 2.

Pour séparer le petit lait du yaourt, la paroi filtrante 4 ménage des passages inférieurs à 500 µm, et de préférence compris entre 50 µm et 200 µm. Ces dimensions conviennent également à la préparation de fromage blanc. La paroi filtrante 4 est avantageusement réalisée en matériau tissé, par exemple en nylon.

De préférence, le récipient extérieur 5 est configuré pour porter le réceptacle filtrant 1 dans une position basse utilisée lors de la coagulation de la préparation à base de lait pour obtenir par exemple du yaourt ou du fromage blanc, ainsi que dans une position haute utilisée pour recueillir dans le récipient extérieur 5 le petit lait s'égouttant du réceptacle filtrant 1.

A cet effet, le récipient extérieur 5 présente avantageusement des organes de support 40 prévus pour porter le corps principal 3 du réceptacle filtrant 1 au moins partiellement à l'intérieur du récipient extérieur 5 en ménageant au moins un espace sous le corps principal 3. Le réceptacle filtrant 1 reposant sur les organes de support 40 est alors disposé en position haute dans le récipient extérieur 5, et le récipient extérieur 5 peut recueillir le petit lait s'écoulant des fenêtres d'égouttage 2.

Le récipient extérieur 5 comporte un fond 41 raccordé à des parois latérales 42. Deux organes de support 40 sont issus de l'une des parois latérales 42, le troisième organe de support 40 étant issu de la paroi latérale 42 opposée. Les organes de support 40 sont formés par la face supérieure de protubérances latérales internes 43 des parois latérales 42 s'arrêtant à distance d'un bord supérieur 44 du récipient extérieur 5.

Le réceptacle filtrant 1 présente trois protubérances latérales externes 50 susceptibles de reposer sur les organes de support 40 du récipient extérieur 5 lorsque le réceptacle filtrant 1 occupe la position haute.

Tel que visible sur les figures 1 et 2, deux protubérances latérales externes 50 sont formées par un bord inférieur de l'une des parois latérales pleines 30 encadrant une encoche latérale 51, la troisième protubérance latérale externe 50 formée par un bord inférieur de l'autre paroi latérale pleine 30 étant encadrée par deux encoches latérales 51. Des organes de préhension 52 sont ménagés au-dessus des encoches latérales 51.

Les encoches latérales 51 sont prévues pour loger les organes de support 40 du récipient extérieur 5 lorsque le réceptacle filtrant 1 occupe la position basse.

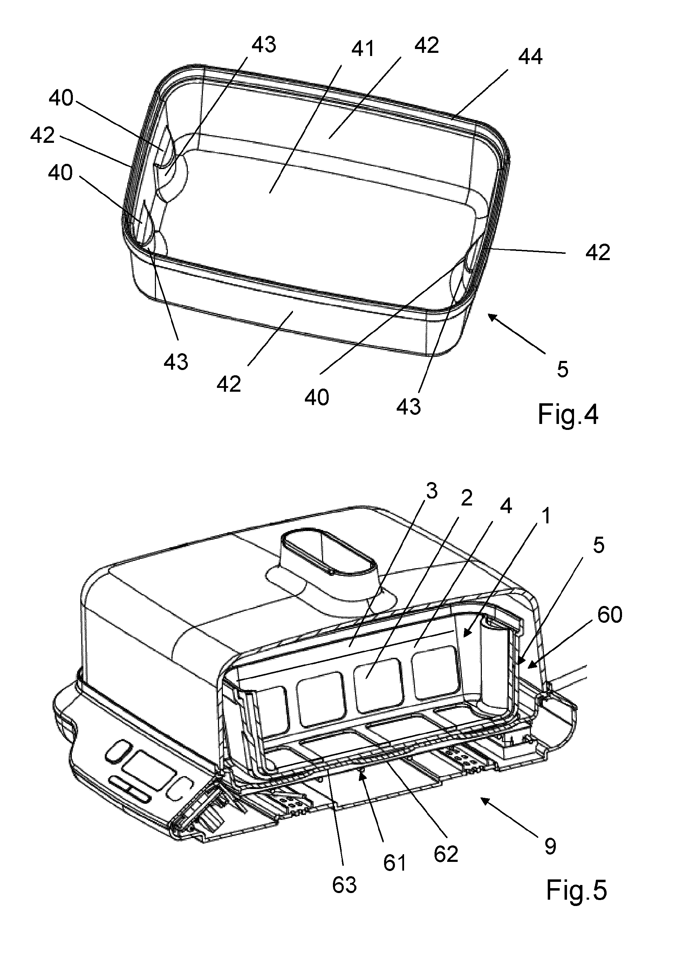

La figure 5 montre une yaourtière électrique domestique 9, comportant une enceinte 60 logeant le récipient extérieur 5 prévu pour contenir le réceptacle filtrant 1 et une préparation à base de lait et de ferments. L'enceinte 60 étant associée à des moyens de chauffe 61 formés par exemple par un serpentin blindé fixé sous une plaque métallique 62 disposée sous une base 63 de l'enceinte 60. Le réceptacle filtrant 1 occupant la position basse repose sur le fond 41 du récipient extérieur 5. Le récipient extérieur 5 loge entièrement le réceptacle filtrant 1 occupant la position basse.

Le dispositif d'égouttage selon l'invention illustré sur les figures s'utilise de la manière suivante.

Dans la position basse du réceptacle filtrant 1 illustrée sur la figure 5, la minimisation de l'espace entre les parois extérieures du réceptacle filtrant 1 et les parois intérieures du récipient extérieur 5 permet de minimiser la quantité de préparation à base de lait et de ferments se trouvant hors du réceptacle filtrant 1. La coagulation de la préparation à base de lait et de ferments est obtenue par chauffage du récipient extérieur 5 et du réceptacle filtrant 1 disposés dans l'enceinte 60 de la yaourtière électrique 9.

Pour passer de la position basse à la position haute du réceptacle filtrant 1, l'utilisateur retire le récipient extérieur 5 contenant le réceptacle filtrant 1 hors de l'enceinte 60, saisit le réceptacle filtrant 1 par les organes de préhension 52, soulève le réceptacle filtrant 1 hors du récipient extérieur 5, tourne le réceptacle filtrant 1 d'un demi-tour par rapport au récipient extérieur 5, et repose le réceptacle filtrant 1 dans le récipient extérieur 5. Les organes de support 40 portent alors le réceptacle filtrant 1 en position haute en ménageant un espace sous le réceptacle filtrant 1. Les organes de support 40 du récipient extérieur 5 portent les protubérances latérales externes 50 du réceptacle filtrant 1.

La filtration permet de rendre la préparation plus moelleuse en laissant échapper une quantité plus ou moins importante de petit lait.

Le réceptacle filtrant 1 présentant plusieurs zones filtrantes sur une âme rigide peut être facilement manipulé avec les organes de préhension 52 du corps corps principal 3. Un dispositif d'égouttage présentant une position basse prévue pour la transformation de la préparation et une position haute d'égouttage peut ainsi être aisément réalisé. La rigidité du corps principal 3 permet aussi de maximiser le volume utile du réceptacle filtrant 1 par rapport au récipient extérieur 5.

A titre de variante, les faces perméables du réceptacle filtrant 1 ne sont pas nécessairement planes, mais peuvent par exemple être incurvées, de préférence dans une seule direction.

A titre de variante, le réceptacle filtrant 1 peut présenter une géométrie arrondie ne formant qu'une seule paroi latérale, perméable ou non.

A titre de variante, le fond perméable 10 comporte au moins deux fenêtres d'égouttage 2 séparées par une traverse 11 issue du corps principal 3.

A titre de variante, le fond perméable 10 comporte au moins quatre fenêtres d'égouttage 2, et quatre traverses 11 séparent lesdites fenêtres d'égouttage 2. A titre de variante, le réceptacle filtrant 1 peut présenter au moins une paroi latérale perméable 20 comportant au moins l'une des fenêtres d'égouttage 2.

A titre de variante la ou au moins l'une des parois latérales perméables 20 peut comporter au moins deux fenêtres d'égouttage 2 séparées par un montant latéral 21 issu du corps principal 3. Ainsi si désiré chacune des parois latérales perméables 20 comporte au moins deux fenêtres d'égouttage 2 séparées par un montant latéral 21 issu du corps principal 3.

A titre de variante, le réceptacle filtrant 1 ne comporte pas nécessairement de paroi latérale perméable.

A titre de variante, le corps principal 3 peut porter plusieurs parois filtrantes 4 s'étendant chacune au travers de la ou de l'une au moins des fenêtres d'égouttage 2.

A titre de variante, le réceptacle filtrant 1 peut comprendre un corps principal 3 portant au moins une paroi filtrante 4 s'étendant au travers de la ou de l'une au moins des fenêtres d'égouttage 2. Le réceptacle filtrant 1 peut par exemple comporter une paroi filtrante 4 par face perméable présentant au moins une fenêtre d'égouttage 2.

A titre de variante, le corps principal 3 n'est pas nécessairement surmoulé sur la ou les parois filtrantes 4 autour de la ou des fenêtres d'égouttage 2. La ou les parois filtrantes 4 pourraient notamment être collées sur le corps principal 3.

A titre de variante, la ou les parois filtrantes 4 ne sont pas nécessairement réalisées en matériau tissé, mais peuvent par exemple être réalisées en matériau non tissé, ou encore en métal perforé obtenu par électroérosion. La géométrie des passages ménagés par la ou les parois filtrantes 4 n'est pas nécessairement circulaire ou carrée. Une ou des parois filtrantes 4 présentant des passages allongés peuvent être utilisées. Le paramètre dimensionnel pertinent pour la filtration est la largeur des passages, la longueur pouvant être plus importante sans affecter les performances de filtration.

La présente invention n'est nullement limitée à l'exemple de réalisation décrit et à ses variantes, mais englobe de nombreuses modifications dans le cadre des revendications.

## Revendications

1. Dispositif d'égouttage pour préparations alimentaires partiellement coagulées, comportant un réceptacle filtrant (1) présentant au moins une fenêtre d'égouttage (2), le réceptacle filtrant (1) présentant un fond perméable (10) comportant au moins l'une des fenêtres d'égouttage (2), le réceptacle filtrant (1) comprenant un corps principal (3) délimitant la ou les fenêtres d'égouttage (2), le corps principal (3) portant au moins une paroi filtrante (4) s'étendant au travers de la ou de l'une au moins des fenêtres d'égouttage (2), le corps principal (3) et la ou les parois filtrantes (4) étant assemblés par surmoulage ou par collage, lequel réceptacle filtrant (1) présente au moins deux fenêtres d'égouttage (2) de sorte qu'au moins une partie du corps principal (3) s'étend entre lesdites deux fenêtres d'égouttage (2), et en ce que le fond perméable (10) comporte au moins deux fenêtres d'égouttage (2) séparées par une traverse (11) issue du corps principal (3), la largeur de la ou de chacune des traverses (11) étant inférieure à la largeur de chacune des fenêtres d'égouttage (2).

2. Dispositif d'égouttage selon la revendication 1, **caractérisé en ce que** le réceptacle filtrant (1) comporte plusieurs faces et **en ce que** les fenêtres d'égouttage (2) appartiennent chacune à l'une des faces du réceptacle filtrant (1).

3. Dispositif d'égouttage selon l'une des revendications 1 ou 2, **caractérisé en ce que** le fond perméable (10) comporte au moins quatre fenêtres d'égouttage (2) et **en ce que** quatre traverses (11) issues du corps principal (3) séparent lesdites fenêtres d'égouttage (2).

4. Dispositif d'égouttage selon l'une des revendications 1 à 3, **caractérisé en ce que** le réceptacle filtrant (1) présente au moins une paroi latérale perméable (20) comportant au moins l'une des fenêtres d'égouttage (2).

5. Dispositif d'égouttage selon la revendication 4, **caractérisé en ce que** la ou au moins l'une des parois latérales perméables (20) comporte au moins deux fenêtres d'égouttage (2) séparées par un montant latéral (21) issu du corps principal (3).

6. Dispositif d'égouttage selon l'une des revendications 4 ou 5, **caractérisé en ce que** le réceptacle filtrant (1) présente deux parois latérales perméables (20) agencées de manière opposée.

7. Dispositif d'égouttage selon les revendications 5 et 6, **caractérisé en ce que** chacune des parois latérales perméables (20) comporte au moins deux fenêtres d'égouttage (2) séparées par un montant latéral (21) issu du corps principal (3), la largeur du montant latéral (21) étant inférieure à la largeur des fenêtres d'égouttage (2) des parois latérales perméables (20).

8. Dispositif d'égouttage selon l'une des revendications 5 ou 7, **caractérisé en ce que** le montant latéral (21) forme un élément de rigidification s'élevant sur toute la hauteur de la paroi latérale perméable (20).

9. Dispositif d'égouttage selon l'une des revendications 1 à 8, **caractérisé en ce que** le réceptacle filtrant (1) présente deux parois latérales pleines (30) agencées de manière opposée.

10. Dispositif d'égouttage selon les revendications 6 et 9, **caractérisé en ce que** les deux parois latérales pleines (30) sont intercalées entre les deux parois latérales perméables (20).

11. Dispositif d'égouttage selon l'une des revendications 1 à 10, **caractérisé en ce qu'**une même paroi filtrante (4) s'étend au travers d'au moins deux fenêtres d'égouttage (2).

12. Dispositif d'égouttage selon l'une des revendications 1 à 11, **caractérisé en ce que** le corps principal (3) est surmoulé sur la ou les parois filtrantes (4) autour de la ou des fenêtres d'égouttage (2).

13. Dispositif d'égouttage selon la revendication 12, **caractérisé en ce que** les fenêtres d'égouttage (2) sont affleurantes du côté intérieur du réceptacle filtrant (1).

14. Dispositif d'égouttage selon l'une des revendications 1 à 13, **caractérisé en ce que** la ou les parois filtrantes (4) ménagent des passages inférieurs à 500 µm et de préférence compris entre 50 µm et 200 µm.

15. Dispositif d'égouttage selon l'une des revendications 1 à 14, **caractérisé en ce que** la ou chaque paroi filtrante (4) couvre la ou au moins l'une des fenêtre(s) d'égouttage (2).

16. Dispositif d'égouttage selon l'une des revendications 1 à 15, **caractérisé en ce que** la (les) paroi(s) filtrante(s) (4) s'étendent au-delà des bords latéraux des fenêtres d'égouttage (2) pour assurer une bonne liaison avec le corps principal (3).

17. Dispositif d'égouttage selon l'une des revendications 1 à 16, **caractérisé en ce que** le réceptacle filtrant (1) présente une capacité de 1 litre.

18. Yaourtière électrique domestique (9), comportant une enceinte (60) logeant un récipient extérieur (5) prévu pour contenir un réceptacle filtrant (1) et une préparation à base de lait et de ferments, l'enceinte (60) étant associée à des moyens de chauffe (61), le récipient extérieur (5) et le réceptacle filtrant (1) formant un dispositif d'égouttage, **caractérisé en ce que** le dispositif d'égouttage comportant le réceptacle filtrant (1) est conforme à l'une des revendications 1 à 17.

## Patentansprüche

1. Abtropfvorrichtung für teilweise geronnene Nahrungsmittelzubereitungen mit einem Filterbehältnis (1), das zumindest eine Abtropföffnung (2) aufweist, wobei das Filterbehältnis (1) einen durchlässigen Boden (10) mit zumindest einer der Abtropföffnungen (2) aufweist, wobei das Filterbehältnis (1) einen Hauptteil (3) umfasst, der die Abtropföffnung oder Abtropföffnungen (2) begrenzt, wobei der Hauptteil (3) zumindest eine Filterwand (4) trägt, die durch die oder zumindest durch eine der Abtropföffnungen (2) verläuft, wobei der Hauptteil (3) und die Filterwand oder Filterwände (4) durch Aufformen oder Kleben zusammengesetzt ist bzw. sind, wobei das Filterbehältnis (1) zumindest zwei Abtropföffnungen (2) aufweist, so dass zumindest ein Teil des Hauptteils (3) zwischen den genannten beiden Abtropföffnungen (2) erstreckt, und wobei der durchlässige Boden (10) zumindest zwei Abtropföffnungen (2) umfasst, die durch eine Querstrebe (11) getrennt sind, welche aus dem Hauptteil (3) hervorgeht, wobei die Breite der oder jeder Querstrebe (11) geringer als die Breite jeder Abtropföffnung (2) ist.

2. Abtropfvorrichtung nach Anspruch 1, **dadurch gekennzeichnet, dass** das Filterbehältnis (1) mehrere Seiten umfasst und dass de Abtropföffnungen (2) jeweils zu einer der Seiten des Filterbehältnisses (1) gehören.

3. Abtropfvorrichtung nach einem der Ansprüche 1 oder 2, **dadurch gekennzeichnet, dass** der durchlässige Boden (10) zumindest vier Abtropföffnungen (2) umfasst und dass die vier Querstreben (11), die aus dem Hauptteil (3) hervorgehen, die genannten Abtropföffnungen (2) trennen.

4. Abtropfvorrichtung nach einem der Ansprüche 1 bis 3, **dadurch gekennzeichnet, dass** das Filterbehältnis (1) zumindest eine durchlässige Seitenwand (20) mit zumindest einer der Abtropföffnungen (2) aufweist.

5. Abtropfvorrichtung nach Anspruch 4, **dadurch gekennzeichnet, dass** die oder zumindest eine der durchlässigen Seitenwände (20) zumindest zwei Abtropföffnungen (2) umfasst, die durch eine Seitenstütze (21) getrennt sind, die aus dem Hauptteil (3) hervorgeht.

6. Abtropfvorrichtung nach einem der Ansprüche 4 oder 5, **dadurch gekennzeichnet, dass** das Filterbehältnis (1) zwei durchlässige Seitenwände (20) aufweist, die gegenüberliegend angeordnet sind.

7. Abtropfvorrichtung nach Anspruch 5 und 6, **dadurch gekennzeichnet, dass** jede der durchlässigen Seitenwände (20) zumindest zwei Abtropföffnungen (2) umfasst, die durch eine Seitenstütze (21) getrennt sind, die aus dem Hauptteil (3) hervorgeht, wobei die Breite der Seitenstütze (21) geringer als die Breite der Abtropföffnungen (2) der durchlässigen Seitenwände (20) ist.

8. Abtropfvorrichtung nach einem der Ansprüche 5 oder 7, **dadurch gekennzeichnet, dass** die Seitenstütze (21) ein Versteifungselement bildet, das sich auf die gesamte Höhe der durchlässigen Seitenwand (20) erhebt.

9. Abtropfvorrichtung nach einem der Ansprüche 1 bis 8, **dadurch gekennzeichnet, dass** das Filterbehältnis (1) zwei massive Seitenwände (30) aufweist, die gegenüberliegend angeordnet sind.

10. Abtropfvorrichtung nach den Ansprüchen 6 und 9, **dadurch gekennzeichnet, dass** die beiden massiven Seitenwände (30) zwischen den beiden durchlässigen Seitenwände (20) eingefügt sind.

11. Abtropfvorrichtung nach einem der Ansprüche 1 bis 10, **dadurch gekennzeichnet, dass** ein und dieselbe Filterwand (4) durch zumindest zwei Abtropföffnungen (2) verläuft.

12. Abtropfvorrichtung nach einem der Ansprüche 1 bis 11, **dadurch gekennzeichnet, dass** der Hauptteil (3) auf die Filterwand oder Filterwände (4) um die Abtropföffnung oder Abtropföffnungen (2) herum aufgeformt ist.

13. Abtropfvorrichtung nach Anspruch 12, **dadurch gekennzeichnet, dass** die Abtropföffnungen (2) zur Innenseite des Filterbehälters (1) offen liegen.

14. Abtropfvorrichtung nach einem der Ansprüche 1 bis 13, **dadurch gekennzeichnet, dass** die Filterwand oder Filterwände (4) Durchlässe von unter 500 µm und vorzugsweise zwischen 50 µm und 200 µm ausbildet bzw. ausbilden.

15. Abtropfvorrichtung nach einem der Ansprüche 1 bis 14, **dadurch gekennzeichnet, dass** die oder jede Filterwand (4) die oder zumindest eine der Abtropföffnung(en) (2) abdeckt.

16. Abtropfvorrichtung nach einem der Ansprüche 1 bis 15, **dadurch gekennzeichnet, dass** sich die Filterwand bzw. Filterwände (4) über die seitlichen Ränder der Abtropföffnungen (2) hinaus erstreckt bzw. erstrecken, um eine gute Verbindung zum Hauptteil (3) sicherzustellen.

17. Abtropfvorrichtung nach einem der Ansprüche 1 bis 16, **dadurch gekennzeichnet, dass** das Filterbehältnis (1) eine Kapazität von einem Liter aufweist.

18. Elektrischer Joghurtbereiter (9) für den Haushalt mit einem Gehäuse (60), das ein äußeres Gefäß (5) zur Aufnahme eines Filterbehältnisses (1) und einer Zubereitung auf der Basis von Milch und Joghurtkulturen einschließt, wobei das Gehäuse (60) mit Heizmitteln (61) verbunden ist, wobei das äußere Gefäß (5) und das Filterbehältnis (1) eine Abtropfvorrichtung bilden, **dadurch gekennzeichnet, dass** die Abtropfvorrichtung mit dem Filterbehältnis (1) einem der Ansprüche 1 bis 17 entspricht.

## Claims

1. Draining device for partially coagulated food preparations, comprising a filter container (1) with at least one draining window (2), the filter container (1) having a permeable base (10) with at least one of the draining windows (2), the filter container (1) comprising a main body (3) delimiting the draining window or windows (2), the main body (3) having at least one filtering wall (4) extending through the draining window or at least one of the draining windows (2), the main body (3) and the filtering wall or walls (4) being assembled by overmolding or bonding, wherein the filter container (1) has at least two draining windows (2) such that at least one part of the main body (3) extends between said two draining windows (2), and the permeable base (10) comprises at least two draining windows (2) separated by a crosspiece (11) coming from the main body (3), the width of the crosspiece or each of the crosspieces (11) being less than the width of each of the draining windows (2).

2. Draining device according to claim 1, **characterised in that** the filter container (1) has several sides and **in that** the draining windows (2) each belong to one of the sides of the filter container (1).

3. Draining device according to claims 1 and 2, **characterised in that** the permeable base (10) comprises at least four draining windows (2) and **in that** four crosspieces (11) from the main body (3) separate said draining windows (2).

4. Draining device according to claims 1 to 3, **characterised in that** the filter container (1) has at least one permeable side wall (20) having at least one of the draining windows (2).

5. Draining device according to claim 4, **characterised in that** the or at least one of the permeable side walls (20) comprises at least two draining windows (2) separated by a lateral upright (21) from the main body (3).

6. Draining device according to one of claims 4 or 5, **characterised in that** the filter container (1) has two permeable side walls (20) arranged opposite each other.

7. Draining device according to claims 5 and 6, **characterised in that** each of the permeable side walls (20) comprises at least two draining windows (2) separated by a lateral upright (21) from the main body (3), the width of the lateral upright (21) being less than the width of the draining windows (2) of the permeable side walls (20).

8. Draining device according to one of claims 5 or 7, **characterised in that** the lateral upright (21) forms a stiffening element rising the entire height of the permeable side wall (20).

9. Draining device according to one of claims 1 to 8, **characterised in that** the filter container (1) has two solid permeable side walls (30) arranged opposite each other.

10. Draining device according to claims 6 and 9, **characterised in that** the two solid side walls (30) are interposed between the two permeable side walls (20).

11. Draining device according to one of claims 1 to 10, **characterised in that** the same filtering wall (4) extends through at least two draining windows (2).

12. Draining device according to claims 1 to 11, **characterised in that** the main body (3) is overmolded onto the filter wall or walls (4) around the draining window or windows (2).

13. Draining device according to claim 12, **characterised in that** the draining windows (2) are flush with the inside of the filter container (1).

14. Draining device according to one of claims 1 to 13, **characterised in that** the filter wall or walls (4) handle the passage of less than 500 µm and preferably between 50 µm and 200 µm.

15. Draining device according to one of claims 1 to 14, **characterised in that** the or each filtering wall (4) covers the or at least one of the draining window(s) (2).

16. Draining device according to one of claims 1 to 15, **characterised in that** the filter wall(s) (4) extend(s) beyond the side edges of the draining windows (2) to ensure a good bond with the main body (3).

17. Draining device according to one of claims 1 to 16, **characterised in that** the filter container (1) has a capacity of 1 litre.

18. Domestic electric yoghurt maker (9) comprising an enclosure (60) housing an outer container (5) to hold a filter container (1) and a milk- and ferment-based preparation, the enclosure (60) being associated with heating means (61), the outer container (5) and the filter container (1) forming a draining device, **characterised in that** the draining device comprising the filter container (1) is in conformity with one of claims 1 to 17.
